# EUROPÄISCHE PATENTSCHRIFT

(11) **EP 0 950 458 B1**
(45) Veröffentlichungstag und Bekanntmachung des Hinweises auf die Patenterteilung: **26.05.2004**
(21) Anmeldenummer: 99106785.1
(22) Anmeldetag: 06.04.1999
(51) Int. Cl.: B23G 5/18

(54) **Verfahren zum Gewindefräsen**
Thread milling process
Procédé de filetage

(30) Priorität: 17.04.1998 DE 19817018
(43) Veröffentlichungstag der Anmeldung: 20.10.1999
(73) Patentinhaber: Schmitt, Norbert M., Dr., D-90537 Feucht (DE)
(72) Erfinder: Schmitt, Norbert M., Dr., D-90537 Feucht (DE)
(74) Vertreter: Böhme, Volker, Dipl.-Ing.

(56) Entgegenhaltungen:
- EP-A- 0 852 168
- WO-A-98/10882
- US-A- 4 396 321

## Beschreibung

Die Erfindung betrifft ein Verfahren zum Gewindefräsen.

Ein durch die Praxis bekanntes Gewindefräs-Werkzeug ist ein üblicher Gewindefräser, der in jeder Reihe gleichmäßig verteilt nur volle Gewindefräszähne aufweist. Die Profillänge entspricht der größeren Gewindelänge der im Werkstück zu erzeugenden Gewindegänge und ist entsprechend groß. Es sind die vollen Gewindefräszähne im Abstand der Teilung P des zu erzeugenden Gewindes angeordnet. Es wird der Gewindefräser über die gesamte Profillänge bzw. zu erzeugende Gewindelänge in Eingriff gebracht, so dass das Gewinde nach nur einer Zirkularbewegung erzeugt ist. Dabei wird ein ganz erhebliches Biegemoment auf das Gewindefräs-Werkzeug ausgeübt, das zu einem Biegebruch des Werkzeugs führen kann.

Es ist durch die Praxis auch ein als Gewindefräser ausgebildetes Gewindefräs-Werkzeug bekannt, das für größere Gewindelängen im Werkstück bestimmt ist und das eine gegenüber der Gewindelänge verkürzte Profillänge aufweist, wobei in jeder Reihe gleichmäßig verteilt nur volle Gewindefräszähne vorgesehen sind. Dieser bekannte, verkürzte Profillänge aufweisende Gewindebohrer wird, wenn er eine Zirkularbewegung durchgeführt und einen Teil der Gewindegänge erzeugt hat, erneut positioniert und führt dann anschließend an die erneute Positionierung zusätzliche Zirkularbewegung bei Rotation und Vorschub durch, um einen weiteren Teil der Gewindegänge zu erzeugen. Jedoch erfordert diese erneute Positionierung erneut Positionierungszeit, die Nebenzeit genannt wird. Diese zusätzlichen Nebenzeiten sind ein Nachteil der bekannten Gewindefräser mit den zusätzlichen Positionierungen.

Aus *WO 89*/*10882 A1* ist ein kombiniertes Bohr- und Gewindefräs-Werkzeug bekannt mit versetzten Gewindefräszähnen, wodurch die Spandicke verdoppelt wird und Seitenkräfte durch die geringere Beanspruchung reduziert werden und dadurch eine größere Vorschubgeschwindigkeit und ein geringerer Verschleiß ermöglicht wird. Bei diesem bekannten Gewindefräs-Werkzeug sind die Gewindefräszähne zur Erzeugung der Gewindegänge über eine Profillänge hin steigungsfrei und hintereinander in Reihen angeordnet und es ist jeweils eine Zahnaussparung in Achsrichtung zwischen zwei vollen Gewindefräszähnen angeordnet. Dieses Werkzeug erzeugt mit einem Bohrabschnitt an seinem vorderen Ende eine Kernbohrung und anschließend durch die Gewindefräszähne bei Rotation und seitlichem Versatz zur Wandung der Kernbohrung hin die Gewindegänge des Gewindes.

In der einen Stand der Technik gemäß Artikel 54 (3) EPÜ bildenden EP 0 852 168 A1 ist ein Gewindefräser beschrieben mit einem Schaft und einem Frästeil, der in Umfangsebenen liegende Gewindezähne aufweist, die in Teilungen angeordnet sind. Damit mit dem Gewindefräser große Gewindelängen hergestellt werden können, ohne dass die Gefahr eines Bruches besteht, fehlen in Abständen die Gewindezähne von Teilungen innerhalb einer Umfangsebene vollständig. Der Gewindefräser weist somit in bestimmten Abständen freie Teilungen ohne Gewindezählungen auf. Die Schnittkräfte werden dadurch erheblich reduziert und das Biegemoment im kritischen Bereich am Übergang von Frästeil zum Schaft wesentlich verringert. Um mit diesem Werkzeug das Gewinde in der Bohrungswand zu fräsen, wird das um seine Achse rotierende Werkzeug um die Achse der Gewindebohrung umlaufend bewegt, wobei aufgrund der vorhandenen freien Teilungen am Werkzeug zwei Umläufe um die Achse der Bohrung erforderlich sind und während jedes dieser beiden Umläufe das Werkzeug um je eine Teilung axial verschoben wird. Die Gewindefräszähne sind bei diesem Gewindefräs-Werkzeug über eine Profillänge hin steigungsfrei und hintereinander in Reihen angeordnet und weisen jeweils wenigstens eine Zahnaussparung in Achsrichtung zwischen zwei vollen Gewindefräszähnen auf. Das Gewinde wird mit diesem bekannten Gewindefräser durch Zirkularfräsen erzeugt.

Eine Aufgabe der Erfindung ist es, ein Verfahren zum Gewindefräsen anzugeben, bei dem ein Gewindefräs-Werkzeug nur einmal positioniert wird und bei dem das von den wirksamen Gewindefräszähnen verursachte Biegemoment an dem Gewindefräs-Werkzeug vermindert ist.

Diese Aufgabe wird gemäß der Erfindung gelöst mit den Merkmalen des Anspruchs 1 oder des Anspruchs 2 oder des Anspruchs 3 oder des Anspruchs 4.

Die Erfindung besteht gemäß Anspruch 1 in einem Verfahren zum Gewindefräsen, bei dem angewendet wird ein Gewindefräs-Werkzeug für größere Gewindelängen, das über eine Profillänge hin steigungsfreie Gewindefräszähne zur Erzeugung von Gewindegängen aufweist, wobei die Gewindefräszähne hintereinander in Reihen angeordnet sind, und das jeweils eine Zahnaussparung - in Achsrichtung und/oder in Umfangsrichtung gesehen - zwischen zwei vollen Gewindefräszähnen angeordnet aufweist, bei dem das Gewindefräswerkzeug zu der Gewindegänge-Erzeugung in einer Kernbohrung nur einmal positioniert wird, indem es in Achsrichtung eingestellt und nach außen zugestellt wird, bei dem die Gewindegänge-Erzeugung unter Rotation, Vorschub und Zirkularbewegung des Gewindefräs-Werkzeugs durchgeführt wird und bei dem anschließend an die der nur einen Positionierung folgende Zirkularbewegung entsprechend der Zahnaussparung ohne zusätzliche Positionierung zusätzliche Zirkularbewegung bei Rotation und Vorschub durchgeführt wird.

Für die Erfindung sind also nicht allein die Zahnaussparungen wichtig. Wichtig ist vielmehr, dass jeder Zahn nach der einen Positionierung nicht nur bei einem Umlauf der Zirkularbewegung arbeitet, sondern entsprechend der Anzahl der pro Zahnaussparung weggelassenen Zähne noch bei einer entsprechenden Anzahl zusätzlicher Umläufe arbeitet. Bei der Erfindung macht jeder Zahn pro Umlauf der Zirkularbewegung einen axialen Weg p, der dem Abstand zwischen einem tatsächlich vorhandenen Gewindefräszahn und einem axial benachbarten "ausgesparten" Zahn entspricht. Der Gewindefräszahn arbeitet also bei einer auf nur einen Zahn beschränkten Zahnaussparung über einen axialen Weg 2p.

Besonders zweckmäßig und vorteilhaft ist es, wenn gemäß Anspruch 2 jeweils die Zahnaussparung der einen Reihe von Gewindefräszähnen gegenüber der Zahnaussparung der benachbarten Reihe von Gewindefräszähnen in Achsrichtung versetzt ist. Wenn die Zahnaussparung jeweils nur einen Gewindefräszahn betrifft, dann kann diese Gestaltung bei einer geraden Anzahl von Gewindefräszahn-Reihen vorgesehen sein. Unregelmäßigkeiten in der Verteilung der Zahnaussparung verhindern auch unerwünschte Schwingungen des Werkzeugs.

Bei einer Bauweise der Erfindung folgt in jeder Reihe von Gewindefräszähnen - in Vorschubrichtung gesehen - einer Zahnaussparung nur ein voller Gewindefräszahn. Besonders zweckmäßig und vorteilhaft ist es jedoch auch, wenn in jeder Reihe von Gewindefräszähnen - in Vorschubrichtung gesehen - einer Zahnaussparung mehrere volle Gewindefräszähne folgen. Man kann z. B. den folgenden vollen Gewindefräszahn, wenn er zu stark abgenutzt ist, abschleifen. Diese Gestaltung lässt sich jedoch auch mit Vorteil vorsehen, wenn die Zahnaussparung von Reihe zu Reihe versetzt ist.

Besonders zweckmäßig und vorteilhaft ist es weiterhin, wenn die Zahnaussparung sich auf den gesamten Gewindefräszahn erstreckt. Es ist so die durch die Zahnaussparung mögliche Entlastung des Gewindefräszahn-Werkzeugs maximal erreicht.

Besonders zweckmäßig und vorteilhaft ist es jedoch ebenso, wenn gemäß Anspruch 3 die Zahnaussparung sich nur auf einen die Zahnspitze umfassenden vorderen Teil des Gewindefräszahns erstreckt, der mindestens 50 % der Zahnhöhe ausmacht. Dies genügt, wenn nur eine teilweise Entlastung des Werkzeugs durch Zahnaussparung gewünscht ist. Diese Ausbildung verhindert auch eine Gratbildung beim erzeugten Gewinde.

Besonders zweckmäßig und vorteilhaft ist es sodann, wenn gemäß Anspruch 4 im Bereich der Zahnaussparung der Werkzeugkern mit einer vertiefenden Nut versehen ist. Durch diese Nut wird der Raum zwischen den beiden Gewindefräszähnen, die die Zahnaussparung begrenzen, vergrößert. Die vertiefende Nut des Werkzeugkerns kann zu einem besonders spitzen freien Ende des erzeugten Gewindes beitragen.

Bei dem bei dem Verfahren angewendeten Gewindefräs-Werkzeug ist aufgrund der Zahnaussparung der jeweilige Angriff von Gewindefräszahn am Werkstück vermindert und somit das von den wirksamen Gewindefräszähnen verursachte Biegemoment vermindert, ohne dass eine zusätzliche Nebenzeit anfällt. Dazu wird in Kauf genommen, dass der der Zahnaussparung folgende Gewindefräszahn nicht nur bei der Erzeugung eines ersten Teils der Gewindegänge mitzuwirken hat, sondern auch bei der Erzeugung eines zweiten Teils der Gewindegänge mitzuwirken hat. Während bei dem ersten Teil der Gewindegänge-Erzeugung von zwei einander unmittelbar folgenden Gewindefräszähnen beide gleichmäßig belastet sind, ist bei dem zusätzlichen Teil der Gewindegänge-Erzeugung von den zwei einander unmittelbar folgenden Gewindefräszähnen nur der belastet, der der Zahnaussparung - in Vorschubrichtung oder in Zirkularbewegungsrichtung gesehen - folgt.

Bei dem Verfahren gemäß der Erfindung fällt auch bei mehreren Zirkularbewegungen nur eine Nebenzeit an, was mit kürzerer Fertigungszeit und entsprechend geringeren Herstellungskosten verbunden ist. Unterstützt wird der Einspareffekt zusätzlich durch den Umstand, dass üblicherweise für das seitliche Eintauchen des Gewindefräs-Werkzeugs in das Werkstück auf Gewindeprofiltiefe eine tangentiale Einfahrschleife und für sauberen Übergang der gefrästen Gewinderillen eine Ausfahrschleife benötigt wird. Diese Ein- und Ausfahrschleifen sind mit verlängerten Hauptzeiten verbunden.

Das Gewindefräs-Werkzeug ist in der Regel ein Gewindefräser, der also nur Gewinde fräst. Es ist aber auch möglich, das Gewindefräs-Werkzeug als Gewindefräsbohr-Werkzeug, das am vorderen Ende Bohrschneiden aufweist, auszubilden. Dabei ist es möglich, das Gewindefräs-Werkzeug unter Bohren der Kernbohrung axial zu positionieren oder vorzusehen, dass zu der Gewindegänge-Erzeugung in einer vorgebohrten Kernbohrung positioniert wird. In der Regel ist jede Reihe von Gewindefräszähnen mit Zahnaussparung(en) versehen. Mit Zahnaussparung ist gemeint, dass zwischen zwei Gewindefräszähnen eine Lücke ist, die so groß ist, dass darin ein voller Gewindefräszahn Platz hätte.

Bei dem Gewindefräs-Werkzeug sind die Spannuten z. B. geradlinig achsparallel. In der Regel verlaufen die Spannuten jedoch gedrallt bzw. wendelförmig, da dies in Verbindung mit der Zahnaussparung die Wirksamkeit der gedrallten Spannuten verbessert. Die Anzahl der Spannuten bzw. der Reihen von Gewindefräszähnen ist im Rahmen der Erfindung an sich beliebig.

Besonders zweckmäßig und vorteilhaft ist es, wenn in jeder Reihe von Gewindefräszähnen Zahnaussparung an der gleichen axialen Stelle bzw. Höhe vorgesehen ist und wenn anschließend an die der nur einen Positionierung folgende Zirkularbewegung entsprechend der Zahnaussparung ohne zusätzliche Positionierung zusätzliche Zirkularbewegung bei Rotation und Vorschub durchgeführt wird. Diese Gestaltung ist davon unabhängig, ob die Anzahl von Gewindefräszahn-Reihen gerade oder ungerade ist, und ist vereinfacht herzustellen.

Es ist möglich, in einer Reihe von Gewindefräszähnen nur eine Zahnaussparung vorzusehen. Besonders zweckmäßig und vorteilhaft ist es jedoch, wenn jede Reihe von Gewindefräszähnen - in Achsrichtung gesehen - mehrere Zahnaussparungen aufweist. Dies trägt zu einer größeren Profillänge des Werkzeugs bei.

In der Zeichnung sind bevorzugte Ausführungsformen der Erfindung dargestellt und zeigt
- Fig. 1: eine schematische Seitenansicht eines Teils eines Gewindefräs-Werkzeugs für größere Gewindelängen,
- Fig. 2: eine Stirnansicht des Gewindefräs-Werkzeugs gemäß Fig. 1,
- Fig. 3: eine schematische Seitenansicht eines Teils eines weiteren Gewindefräs-Werkzeugs für größere Gewindelängen,
- Fig. 4: vereinzelt vier Reihen von Gewindefräszähnen eines Gewindefräs-Werkzeugs für größere Gewindelängen,
- Fig. 5: eine nur teilweise Zahnaussparung,
- Fig. 6: eine Zahnaussparung mit vertiefender Nut,
- Fig. 7: vereinzelt vier Reihen von Gewindefräszähnen eines Gewindefräs-Werkzeugs für größere Gewindelängen,
- Fig. 8: zwei der Reihen gemäß Fig. 7 mit den "fehlenden" Gewindefräszähnen,
- Fig. 9: vereinzelt drei Reihen von Gewindefräszähnen eines Gewindefräs-Werkzeugs für größere Gewindelängen,
- Fig. 10: vereinzelt vier Reihen von Gewindefräszähnen eines Gewindefräs-Werkzeugs für größere Gewindelängen,
- Fig. 11: vereinzelt zwei Reihen von Gewindefräszähnen eines Gewindefräs-Werkzeugs für größere Gewindelängen,
- Fig. 12: einen Schnitt eines Gewindefräs-Werkzeugs für größere Gewindelängen, im Zustand der Positionierung in einem Werkstück,
- Fig. 13: eine Seitenansicht des Gewindefräs-Werkzeugs gemäß Fig. 12, im Zustand der Positionierung im Werkstück,
- Fig. 14: eine Seitenansicht des Gewindefräs-Werkzeugs gemäß Fig. 12 im Zustand nach einer ersten Zirkularbewegung am Werkstück, und
- Fig. 15: eine Seitenansicht des Gewindefräs-Werkzeugs gemäß Fig. 12 im Zustand nach einer zusätzlichen Zirkularbewegung am Werkstück.

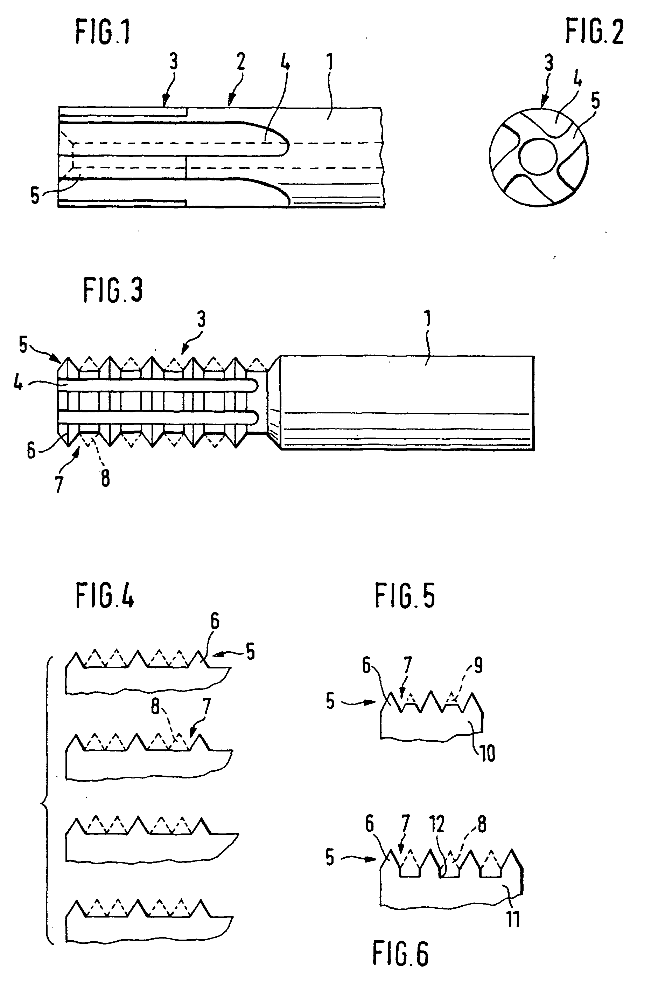

Das Gewindefräs-Werkzeug gemäß Fig. 1 bis 3 ist jeweils als Gewindefräser ausgebildet und weist einen Schaft 1 auf, an den sich unmittelbar oder über ein Zwischenstück 2 ein Gewindefrästeil 3 anschließt. Das Gewindefrästeil 3 ist mit Spannuten 4 versehen, zwischen denen sich Reihen 5 von Gewindefräszähnen 6 erstrecken, die in Fig. 1 nicht im einzelnen gezeigt sind. In Fig. 3 ist eine Zahnaussparung 7 eingezeichnet, indem in jeder Reihe jeder zweite Gewindefräszahn weggelassen ist, wobei die weggelassenen Gewindefräszähne 8 gestrichelt gezeichnet sind. Bei der Ausführungsform gemäß Fig. 3 ist in jede Reihe 5 von Gewindefräszähnen 6 Zahnaussparung 7 in der gleichen axialen Stelle bzw. Höhe vorgesehen, folgt jeder Zahnaussparung 7 nur ein voller Gewindefräszahn 6 und ist jede Zahnaussparung auf einen einzigen fehlenden Gewindefräszahn beschränkt.

In Fig. 4 sind die vier Reihen 5 von Gewindefräszähnen 6 eines weiteren Gewindefrästeils vereinzelt dargestellt. In jeder Reihe 5 ist zwischen zwei Gewindefräszähnen 6 eine Zahnaussparung 7 vorgesehen, die durch zwei weggelassene Gewindefräszähne 8 bedingt ist, die gestrichelt dargestellt sind. Auch hier ist in jeder Reihe 5 von Gewindefräszähnen 6 Zahnaussparung 7 in der gleichen axialen Höhe bzw. Stelle vorgesehen und folgt jeder Zahnaussparung 7 nur ein voller Gewindefräszahn 6. Gemäß Fig. 5 sind zwischen den vollen Gewindefräszähnen 6 Zahnaussparungen 7 vorgesehen, die im Weglassen eines vorderen bzw. äußeren gestrichelt gezeichneten Teils 9 eines Gewindefräszahns besteht, so daß ein Fräszahnrumpfrest 10 verbleibt. Gemäß Fig. 6 ist bei der Zahnaussparung 7 der gestrichelt dargestellte Gewindefräszahn 8 voll weggelassen und im Werkzeugkern 11 eine vertiefende Nut 12 vorgesehen.

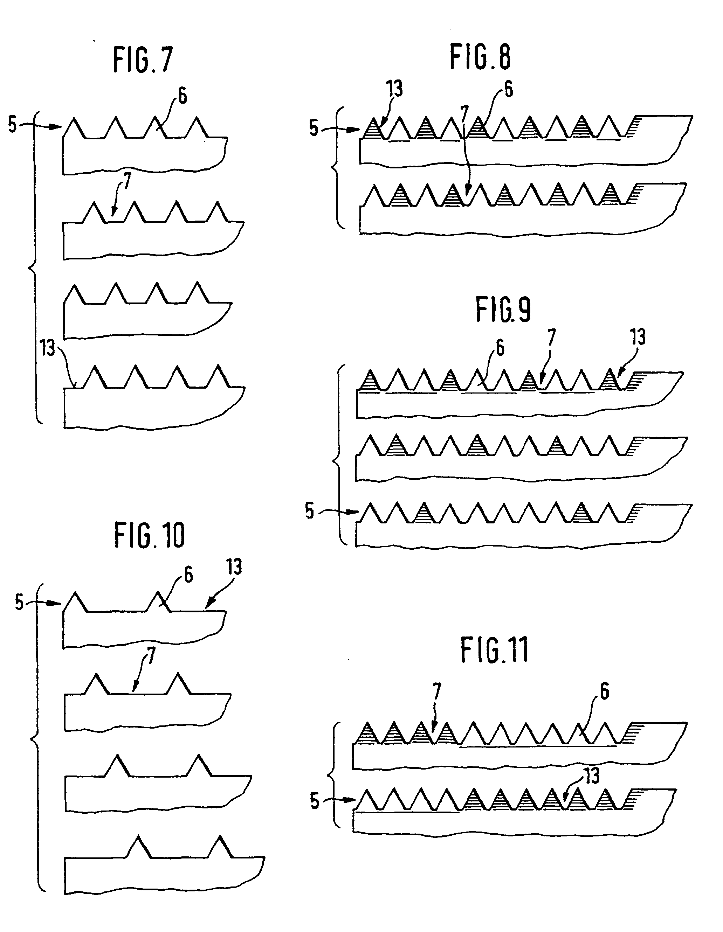

Gemäß Fig. 7 und 8 ist in jeder von vier Reihen 5 von Gewindefräszähnen 6 eines nicht weiter gezeigten Gewindefräs-Werkzeugs zwischen zwei Gewindefräszähnen eine Zahnaussparung 7 vorgesehen, die durch das Fehlen eines Gewindefräszahns bestimmt ist. Die Zahnaussparungen 7 jeder Reihe sind gegenüber denen der in Umfangsrichtung vorhergehenden Reihe um eine Zahnaussparung bzw. um einen Gewindefräszahn axial versetzt. Dadurch ist gegeben, daß auch in Umfangsrichtung gesehen jeweils eine Zahnaussparung zwischen zwei vollen Gewindefräszähnen vorgesehen ist. Durch den reihenweisen Versatz der Zahnaussparungen fallen auch reihenendige Zahnleerstellen 13 an, die im Unterschied zu den echten Zahnaussparungen nur auf einer axialen Seite von einem vollen Gewindefräszahn begrenzt sind. Der axiale Versatz gemäß Fig. 7 und 8 setzt eine gerade Anzahl von Reihen 5 voraus.

Im Unterschied dazu zeigt Fig. 9 einen axialen Versatz, der für eine ungerade Anzahl von Reihen 5 geeignet ist. Hier sind zwischen zwei Aussparungen 7 bzw. einer Aussparung und einer Zahnleerstelle 13 jeweils zwei volle Gewindefräszähne 6 vorhanden und beträgt der axiale Versatz von Reihe zu Reihe jeweils einen Gewindefräszahn. Im Unterschied dazu erstreckt sich bei Fig. 10 eine Zahnaussparung 7 auf den Bereich von drei fehlenden Gewindefräszähnen 6, beträgt der Versatz jeweils den Bereich eines Gewindefräszahns und ist zwischen zwei Zahnaussparungen bzw. einer Zahnaussparung und einer Zahnleerstelle 13 nur ein Gewindefräszahn 6 vorhanden.

Gemäß Fig. 11 erstreckt sich in einer Reihe 5 die Zahnaussparung 7 bzw. Zahnleerstelle 13 auf den Bereich wenigerer Gewindefräszähne als in der benachbarten Reihe und entsprechend ist die Anzahl der Gewindefräszähne in der einen Reihe größer als in der benachbarten Reihe. Bei dieser Ausführungsform sind auch in keiner Reihe solche Zahnaussparungen vorhanden, die in axialer Richtung beiderends von Gewindefräszähnen begrenzt sind, sondern nur solche als Zahnleerstellen bezeichnete Zahnaussparungen vorhanden, die in Umfangsrichtung beiderseits von Gewindefräszähnen 6 begrenzt sind.

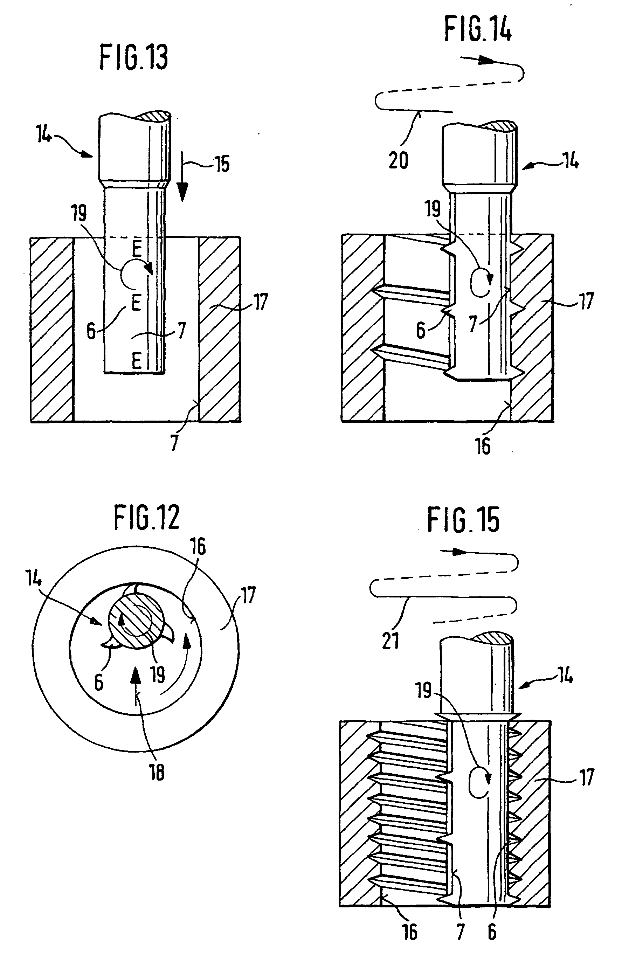

Gemäß Fig. 12 und 13 wird ein Gewindefräs-Werkzeug 14 durch axialen einstellenden Vorschub gemäß einem Pfeil 15 in eine Kernbohrung 16 eines Werkstücks 17 gebracht und dann durch eine zustellende radiale Bewegung gemäß einem Pfeil 18 in einen Zustand gebracht, in dem es positioniert ist. Das Gewindefräs-Werkzeug 14 rotiert ständig gemäß einem Pfeil 19 im Uhrzeigersinn. Das Gewindefräs-Werkzeug 14 weist in Achsrichtung gesehen drei volle Gewindefräszähne 6 auf, wobei zwei axial benachbarte Gewindefräszähne 6 jeweils durch eine Zahnaussparung 7 für zwei Gewindefräszähne getrennt sind. Das Gewindefräs-Werkzeug 14 macht gemäß Fig. 14 zunächst unter Rotation und Vorschub eine Zirkularbewegung von einem Umlauf im Gegenuhrzeigersinn, wobei jeder Gewindefräszahn einen Wendelumlauf macht, wie er durch ein Wendelstück 20 verdeutlicht ist. Anschließend macht das Gewindefräs-Werkzeug 14 gemäß Fig. 15 unter Rotation und Vorschub eine zusätzliche Zirkularbewegung von zwei Umläufen im Gegenuhrzeigersinn, wobei jeder Gewindefräszahn zwei Wendelumläufe macht, wie er durch ein Wendelstück 21 verdeutlicht ist.

## Patentansprüche

1. Verfahren zum Gewindefräsen,
a) bei dem angewendet wird ein Gewindefräs-Werkzeug für größere Gewindelängen,
a1) das über eine Profillänge hin steigungsfreie Gewindefräszähne zur Erzeugung von Gewindegängen aufweist, wobei die Gewindefräszähne hintereinander in Reihen angeordnet sind, und
a2) das wenigstens eine Zahnaussparung sowohl in Achsrichtung als auch in Umfangsrichtung gesehen zwischen zwei vollen Gewindefräszähnen angeordnet aufweist,
b) bei dem das Gewindefräswerkzeug zu der Gewindegänge-Erzeugung in einer Kernbohrung nur einmal positioniert wird, indem es in Achsrichtung eingestellt und nach außen zugestellt wird,
c) bei dem die Gewindegänge-Erzeugung unter Rotation, Vorschub und Zirkularbewegung des Gewindefräs-Werkzeugs durchgeführt wird und
d) bei dem anschließend an die der nur einen Positionierung folgende Zirkularbewegung entsprechend der Zahnaussparung ohne zusätzliche Positionierung zusätzliche Zirkularbewegung bei Rotation und Vorschub durchgeführt wird,
e) wobei jeder Zahn nach der einen Positionierung entsprechend der Anzahl der pro Zahnaussparung weggelassenen Zähne noch bei einer entsprechenden Anzahl zusätzlicher Umläufe arbeitet.

2. Verfahren zum Gewindefräsen,
a) bei dem angewendet wird ein Gewindefräs-Werkzeug für größere Gewindelängen,
a1) das über eine Profillänge hin steigungsfreie Gewindefräszähne zur Erzeugung von Gewindegängen aufweist, wobei die Gewindefräszähne hintereinander in Reihen angeordnet sind, und
a2) das wenigstens eine Zahnaussparung - in Achsrichtung und/oder in Umfangsrichtung gesehen - zwischen zwei vollen Gewindefräszähnen (6) angeordnet aufweist,
a3) wobei jeweils die Zahnaussparung (7) der einen Reihe von Gewindefräszähnen (6) gegenüber der Zahnaussparung der benachbarten Reihe von Gewindefräszähnen in Achsrichtung versetzt ist,
b) bei dem das Gewindefräswerkzeug zu der Gewindegänge-Erzeugung in einer Kernbohrung nur einmal positioniert wird, indem es in Achsrichtung eingestellt und nach außen zugestellt wird,
c) bei dem die Gewindegänge-Erzeugung unter Rotation, Vorschub und Zirkularbewegung des Gewindefräs-Werkzeugs durchgeführt wird und
d) bei dem anschließend an die der nur einen Positionierung folgende Zirkularbewegung entsprechend der Zahnaussparung ohne zusätzliche Positionierung zusätzliche Zirkularbewegung bei Rotation und Vorschub durchgeführt wird,
e) wobei jeder Zahn nach der einen Positionierung entsprechend der Anzahl der pro Zahnaussparung weggelassenen Zähne noch bei einer entsprechenden Anzahl zusätzlicher Umläufe arbeitet.

3. Verfahren zum Gewindefräsen,
a) bei dem angewendet wird ein Gewindefräs-Werkzeug für größere Gewindelängen,
a1) das über eine Profillänge hin steigungsfreie Gewindefräszähne zur Erzeugung von Gewindegängen aufweist, wobei die Gewindefräszähne hintereinander in Reihen angeordnet sind, und
a2) das wenigstens eine Zahnaussparung - in Achsrichtung und/oder in Umfangsrichtung gesehen - zwischen zwei vollen Gewindefräszähnen angeordnet aufweist,
a3) wobei die Zahnaussparung (7) sich nur auf einen die Zahnspitze umfassenden vorderen Teil (9) des Gewindefräszahns (6) erstreckt, der mindestens 50 % der Zahnhöhe ausmacht,
b) bei dem das Gewindefräswerkzeug zu der Gewindegänge-Erzeugung in einer Kernbohrung nur einmal positioniert wird, indem es in Achsrichtung eingestellt und nach außen zugestellt wird,
c) bei dem die Gewindegänge-Erzeugung unter Rotation, Vorschub und Zirkularbewegung des Gewindefräs-Werkzeugs durchgeführt wird und
d) bei dem anschließend an die der nur einen Positionierung folgende Zirkularbewegung entsprechend der Zahnaussparung(en) ohne zusätzliche Positionierung zusätzliche Zirkularbewegung bei Rotation und Vorschub durchgeführt wird,
e) wobei jeder Zahn nach der einen Positionierung entsprechend der Anzahl der pro Zahnaussparung weggelassenen Zähne noch bei einer entsprechenden Anzahl zusätzlicher Umläufe arbeitet.

4. Verfahren zum Gewindefräsen,
a) bei dem angewendet wird ein Gewindefräs-Werkzeug für größere Gewindelängen,
a1) das über eine Profillänge hin steigungsfreie Gewindefräszähne zur Erzeugung von Gewindegängen aufweist, wobei die Gewindefräszähne hintereinander in Reihen angeordnet sind, und
a2) das wenigstens eine Zahnaussparung - in Achsrichtung und/oder in Umfangsrichtung gesehen - zwischen zwei vollen Gewindefräszähnen angeordnet aufweist,
a3) wobei im Bereich der Zahnaussparung (7) der Werkzeugkern (11) mit einer vertiefenden Nut (12) versehen ist,
b) bei dem das Gewindefräswerkzeug zu der Gewindegänge-Erzeugung in einer Kernbohrung nur einmal positioniert wird, indem es in Achsrichtung eingestellt und nach außen zugestellt wird,
c) bei dem die Gewindegänge-Erzeugung unter Rotation, Vorschub und Zirkularbewegung des Gewindefräs-Werkzeugs durchgeführt wird und
d) bei dem anschließend an die der nur einen Positionierung folgende Zirkularbewegung entsprechend der Zahnaussparung(en) ohne zusätzliche Positionierung zusätzliche Zirkularbewegung bei Rotation und Vorschub durchgeführt wird,
e) wobei jeder Zahn nach der einen Positionierung entsprechend der Anzahl der pro Zahnaussparung weggelassenen Zähne noch bei einer entsprechenden Anzahl zusätzlicher Umläufe arbeitet.

5. Verfahren nach einem der vorhergehenden Ansprüche, bei dem jeder Zahn pro Umlauf der Zirkularbewegung einen axialen Weg macht, der dem Abstand zwischen einem tatsächlich vorhandenen Gewindefräszahn und einem axial benachbarten ausgesparten Zahn entspricht.

6. Verfahren nach einem der vorhergehenden Ansprüche, bei dem die Reihen der Gewindefräszähne bei dem angewendeten Gewindefräs-Werkzeug durch Spannuten getrennt sind.

7. Verfahren nach einem der vorhergehenden Ansprüche, bei dem bei dem angewendeten Gewindefräs-Werkzeug in jeder Reihe (5) von Gewindefräszähnen (6) die Zahnaussparung (7) an der gleichen axialen Stelle bzw. Höhe vorgesehen ist und dass anschließend an die der nur einen Positionierung folgende Zirkutarbewegung entsprechend der Zahnaussparung (7) ohne zusätzliche Positionierung zusätzliche Zirkularbewegung bei Rotation und Vorschub durchgeführt wird.

8. Verfahren nach einem der vorhergehenden Ansprüche, bei dem bei dem angewendeten Gewindefräs-Werkzeug in jeder Reihe (5) von Gewindefräszähnen (6) - in Vorschubrichtung gesehen - einer Zahnaussparung (7) mehrere volle Gewindefräszähne (6) folgen.

9. Verfahren nach einem der vorhergehenden Ansprüche, bei dem bei dem angewendeten Gewindefräs-Werkzeug wenigstens eine Zahnaussparung (7) sich auf den gesamten Gewindefräszahn (6) erstreckt.

## Claims

1. Process for thread milling,
a) in which a thread-milling tool for greater thread lengths is used,
a1) which has pitch-free thread-milling teeth over a profile length to produce thread turns, wherein the thread-milling teeth are arranged in rows one behind another, and
a2) which has at least one tooth recess, seen both in axial direction and in peripheral direction, arranged between two complete thread-milling teeth,
b) in which the thread-milling tool is positioned only once in a core bore for producing thread turns, in that it is adjusted in axial direction and is closed externally,
c) in which the production of thread turns is carried out under rotation, advance and circular movement of the thread-milling tool and
d) in which additional circular movement during rotation and advance is carried out subsequent to the circular movement following the only one positioning corresponding to the tooth recess without additional positioning,
e) wherein each tooth still operates for a corresponding number of additional revolutions after the one positioning corresponding to the number of teeth omitted per tooth recess.

2. Process for thread milling,
a) in which a thread-milling tool for greater thread lengths is used,
a1) which has pitch-free thread-milling teeth over a profile length to produce thread turns, wherein the thread-milling teeth are arranged in rows one behind another, and
a2) which has at least one tooth recess - seen in axial direction and/or in peripheral direction - arranged between two complete thread-milling teeth (6),
a3) wherein in each case the tooth recess (7) of the one row of thread-milling teeth (6) is offset in axial direction with respect to the tooth recess of the adjacent row of thread-milling teeth,
b) in which the thread-milling tool is positioned only once in a core bore for producing thread turns, in that it is adjusted in axial direction and is closed externally,
c) in which the production of thread turns is carried out under rotation, advance and circular movement of the thread-milling tool and
d) in which additional circular movement during rotation and advance is carried out subsequent to the circular movement following the only one positioning corresponding to the tooth recess without additional positioning,
e) wherein each tooth still operates for a corresponding number of additional revolutions after the one positioning corresponding to the number of teeth omitted per tooth recess.

3. Process for thread milling,
a) in which a thread-milling tool for greater thread lengths is used,
a1) which has pitch-free thread-milling teeth over a profile length to produce thread turns, wherein the thread-milling teeth are arranged in rows one behind another, and
a2) which has at least one tooth recess - seen in axial direction and/or in peripheral direction - arranged between two complete thread-milling teeth,
a3) wherein the tooth recess (7) extends only to a front part (9) of the thread-milling tooth (6) encompassing the tooth tip, which accounts for at least 50% of the tooth height,
b) in which the thread-milling tool is positioned only once in a core bore for producing thread turns, in that it is adjusted in axial direction and is closed externally,
c) in which the production of thread turns is carried out under rotation, advance and circular movement of the thread-milling tool and
d) in which additional circular movement during rotation and advance is carried out subsequent to the circular movement following the only one positioning corresponding to the tooth recess(es) without additional positioning,
e) wherein each tooth still operates for a corresponding number of additional revolutions after the one positioning corresponding to the number of teeth omitted per tooth recess.

4. Process for thread milling,
a) in which a thread-milling tool for greater thread lengths is used,
a1) which has pitch-free thread-milling teeth over a profile length to produce thread turns, wherein the thread-milling teeth are arranged in rows one behind another, and
a2) which has at least one tooth recess - seen in axial direction and/or in peripheral direction - arranged between two complete thread-milling teeth,
a3) wherein in the region of the tooth recess (7) the tool core (11) is provided with a deepening groove (12),
b) in which the thread-milling tool is positioned only once in a core bore for producing thread turns, in that it is adjusted in axial direction and is closed externally,
c) in which the production of thread turns is carried out under rotation, advance and circular movement of the thread-milling tool and
d) in which additional circular movement during rotation and advance is carried out subsequent to the circular movement following the only one positioning corresponding to the tooth recess(es) without additional positioning,
e) wherein each tooth still operates for a corresponding number of additional revolutions after the one positioning corresponding to the number of teeth omitted per tooth recess.

5. Process according to one of the preceding claims, in which each tooth makes an axial path per revolution of the circular movement, which corresponds to the distance between a thread-milling tooth actually present and an axially adjacent recessed tooth.

6. Process according to one of the preceding claims, in which the rows of thread-milling teeth in the thread-milling tool used are separated by chucking grooves.

7. Process according to one of the preceding claims, in which in the thread-milling tool used, the tooth recess (7) is provided at the same axial position or height in each row (5) of thread-milling teeth (6) and that additional circular movement during rotation and advance is carried out subsequent to the circular movement following the only one positioning corresponding to the tooth recess (7) without additional positioning.

8. Process according to one of the preceding claims, in which in the thread-milling tool used, several complete thread-milling teeth (6) follow in each row (5) of thread-milling teeth (6) - seen in advance direction - of a tooth recess (7).

9. Process according to one of the preceding claims, in which in the thread-milling tool used, at least one tooth recess (7) extends over the whole thread-milling tooth (6).

## Revendications

1. Procédé de filetage,
a) dans lequel on utilise un outil de filetage pour des longueurs de filet plus élevées,
a1) qui comprend des dents de filetage sans pas d'hélice, pour la production de pas de filet, sur une longueur de profil, les dents de filetage étant disposées les unes derrière les autres en rangées et
a2) qui comprend au moins une cavité de dent disposée, si l'on regarde aussi bien dans la direction axiale que dans la direction circonférentielle, entre deux dents de filetage complètes,
b) dans lequel l'outil de filetage n'est positionné qu'une seule fois pour la production de pas de filet dans un avant-trou de taraudage, en ceci qu'il est ajusté dans la direction axiale et avancé vers l'extérieur,
c) dans lequel la production des pas de filet est exécutée avec une rotation, une avance et un mouvement circulaire de l'outil de filetage et
d) dans lequel, à la suite du mouvement circulaire suivant le positionnement unique, un mouvement circulaire supplémentaire est exécuté lors de la rotation et de l'avance, conformément à la cavité de dent, sans positionnement supplémentaire,
e) chaque dent fonctionnant encore, après le positionnement unique, conformément au nombre de dents omises par cavité de dent, pour un nombre correspondant de révolutions supplémentaires.

2. Procédé de filetage,
a) dans lequel on utilise un outil de filetage pour des longueurs de filet plus élevées,
a1) qui comprend des dents de filetage sans pas d'hélice, pour la production de pas de filet, sur une longueur de profil, les dents de filetage étant disposées les unes derrière les autres en rangées et
a2) qui comprend au moins une cavité de dent disposée, si l'on regarde dans la direction axiale et/ou dans la direction circonférentielle, entre deux dents de filetage complètes (6),
a3) à chaque fois, la cavité de dent (7) d'une rangée de dents de filetage (6) étant décalée dans la direction axiale, par rapport à la cavité de dent de la rangée contiguë de dents de filetage,
b) dans lequel l'outil de filetage n'est positionné qu'une seule fois pour la production de pas de filet dans un avant-trou de taraudage, en ceci qu'il est ajusté dans la direction axiale et avancé vers l'extérieur,
c) dans lequel la production des pas de filet est exécutée avec une rotation, une avance et un mouvement circulaire de l'outil de filetage et
d) dans lequel, à la suite du mouvement circulaire suivant le positionnement unique, un mouvement circulaire supplémentaire est exécuté lors de la rotation et de l'avance, conformément à la cavité de dent, sans positionnement supplémentaire,
e) chaque dent fonctionnant encore, après le positionnement unique, conformément au nombre de dents omises par cavité de dent, pour un nombre correspondant de révolutions supplémentaires.

3. Procédé de filetage,
a) dans lequel on utilise un outil de filetage pour des longueurs de filet plus élevées,
a1) qui comprend des dents de filetage sans pas d'hélice, pour la création de pas de filet, sur une longueur de profil, les dents de filetage étant disposées les unes derrière les autres en rangées et
a2) qui comprend au moins une cavité de dent disposée, si l'on regarde dans la direction axiale et/ou dans la direction circonférentielle, entre deux dents de filetage complètes,
a3) la cavité de dent (7) s'étendant seulement sur une partie avant (9), de la dent de filetage (6), englobant la pointe de dent, partie qui s'élève au moins à 50 % de la hauteur de la dent,
b) dans lequel l'outil de filetage n'est positionné qu'une seule fois pour la production de pas de filet dans avant-trou de taraudage, en ceci qu'il est ajusté dans la direction axiale et avancé vers l'extérieur,
c) dans lequel la production des pas de filet est exécutée avec une rotation, une avance et un mouvement circulaire de l'outil de filetage et
d) dans lequel, à la suite du mouvement circulaire suivant le positionnement unique, un mouvement circulaire supplémentaire est exécuté lors de la rotation et de l'avance, conformément à la/aux cavités de dent, sans positionnement supplémentaire,
e) chaque dent fonctionnant encore, après le positionnement unique, conformément au nombre de dents omises par cavité de dent, pour un nombre correspondant de révolutions supplémentaires.

4. Procédé de filetage,
a) dans lequel on utilise un outil de filetage pour des longueurs de filet plus élevées,
a1) qui comprend des dents de filetage sans pas d'hélice, pour la production de pas de filet, sur une longueur de profil, les dents de filetage étant disposées les unes derrière les autres en rangées et
a2) qui comprend au moins une cavité de dent disposée, si l'on regarde dans la direction axiale et/ou dans la direction circonférentielle, entre deux dents de filetage complètes,
a3) au niveau de la cavité de dent (7), le noyau de l'outil étant muni d'une rainure profonde (12),
b) dans lequel l'outil de filetage n'est positionné qu'une seule fois pour la production de pas de filet dans un avant-trou de taraudage, en ceci qu'il est ajusté dans la direction axiale et avancé vers l'extérieur,
c) dans lequel la production des pas de filet est exécutée avec une rotation, une avance et un mouvement circulaire de l'outil de filetage et
d) dans lequel, à la suite du mouvement circulaire suivant le positionnement unique, un mouvement circulaire supplémentaire est exécuté lors de la rotation et de l'avance, conformément à la/aux cavités de dent, sans positionnement supplémentaire,
e) chaque dent fonctionnant encore, après le positionnement unique, conformément au nombre de dents omises par cavité de dent, pour un nombre correspondant de révolutions supplémentaires.

5. Procédé selon l'une des revendications précédentes, dans lequel chaque dent effectue une trajectoire axiale par révolution du mouvement circulaire, trajectoire qui correspond à l'espace entre une dent de filetage réellement existante et une dent évidée axialement contiguë.

6. Procédé selon l'une des revendications précédentes, dans lequel les rangées des dents de filetage sont séparées par des rainures à copeaux dans l'outil de filetage utilisé.

7. Procédé selon l'une des revendications précédentes, dans lequel, pour l'outil de filetage utilisé, dans chaque rangée (5) de dents de filetage (6), la cavité de dent (7) est prévue au même emplacement axial ou à la même hauteur axiale et dans lequel, à la suite du mouvement circulaire suivant le positionnement unique, un mouvement circulaire supplémentaire est exécuté lors de la rotation et de l'avance, conformément à la cavité de dent (7), sans positionnement supplémentaire,

8. Procédé selon l'une des revendications précédentes, dans lequel, pour l'outil de filetage utilisé, dans chaque rangée (5) de dents de filetage (6), si l'on regarde dans la direction d'avance, plusieurs dents de filetage (6) complètes suivent une cavité de dent (7).

9. Procédé selon l'une des revendications précédentes, dans lequel, pour l'outil de filetage utilisé, au moins une cavité de dent (7) s'étend sur l'ensemble de la dent de filetage (6).
